Europäisches Patentamt

European Patent Office

Office européen des brevets

(11) Veröffentlichungsnummer: **0 216 369**
**A2**

(12) **EUROPÄISCHE PATENTANMELDUNG**

(21) Anmeldenummer: 86113135.7

(22) Anmeldetag: 24.09.86

(51) Int. Cl.⁴: **B 29 C 45/32**
**B 29 C 45/27**

(30) Priorität: 26.09.85 DE 3534252

(43) Veröffentlichungstag der Anmeldung:
01.04.87 Patentblatt 87/14

(84) Benannte Vertragsstaaten:
AT BE CH FR GB IT LI LU NL SE

(71) Anmelder: Stübbe GmbH
Ismaninger Str. 67a
D-8000 München 80(DE)

(72) Erfinder: Kaaden, Hans-Heinrich
Friedrich-Herschel-Strasse 5
D-8000 München 80(DE)

(74) Vertreter: Schirmer, Siegfried
Osningstrasse 10
D-4800 Bielefeld 1(DE)

(54) Spritzgiessmaschine zum Herstellen von Kunststoffteilen im Spritzgiess- oder Reaktionsspritzgiessverfahren.

(57) An dem Schmelzeleitkanal der mittleren geteilten Formaufspannplatte einer Spritzgießmaschine ist ein Verschlußdüsensystem so angeordnet, daß neben einer schnellen
Zugänglichkeit zu den einzelnen Teilen des Düsensystems
eine für die Entnahme der Formteile aus den Formen erforderliche Trennung der mittleren geteilten Formaufspannplatte
von der zugeordneten Schneckeneinheit mit einem Minimum
an Aufwand möglich ist.

Nach der Erfindung sind auf der Stirnseite der Schmelzeleitschiene 10 ein in Spritzrichtung in sich verfahrbares Verschlußdüsensystem fest angeordnet, dem ein Schmelzeausgleichssystem innerhalb der Schmelzeleitschiene zugeordnet ist.

Das Verschlußdüsensystem besteht aus dem Hydraulikzylinder 1, einer innenliegenden Torpedoführungshülse 2 mit
einem innenbeheizten verfahrbaren Torpedo 7 sowie einer
verfahrbaren Düsenplatte 4 mit beheizbarer Verschlußdüse 5.
Das Schmelzeausgleichssystem ist in dem dem Schmelzeeintritt gegenüberliegenden Ende der Schmelzeleitschiene angeordnet und ist durch eine Schmelzekammer mit zugeordnetem Hydraulikzylinder gebildet.

Fig. 1

Anmelder:
Stübbe GmbH
Ismaninger Straße 67 a
8000 München 80

Spritzgießmaschine zum Herstellen von Kunststoffteilen im Spritzgieß- oder Reaktionsspritzgießverfahren

Die Erfindung betrifft eine Spritzgießmaschine zum Herstellen von Kunststoffteilen aus Thermoplasten, Duroplasten und/oder Elastomeren im Spritzgießverfahren oder Reaktionsspritzgießverfahren, mit einer Mehrstationen-Schließeinheit in horizontaler oder vertikaler Bauweise zur Aufnahme mehrerer Formen und mit einer zugeordneten Spritzeinheit zum gleichzeitigen Abspritzen der Formen, mit einer bewegbaren mittleren längs zur Schließrichtung geteilten Formaufspannplatte, deren beide Teile durch eine Schnellspannvorrichtung zusammengehalten sind und zwischen deren beiden Teilen ein Schmelzeleitsystem angeordnet ist, das eine oder mehrere separate Schmelzeleitschienen aufweist, wobei jede Schmelzeleitschiene an ihrer Stirnseite längs zur Fließrichtung der Schmelze fest zwischen der geteilt ausgebildeten Formaufspannplatte eingespannt ist und auf einem Flansch der Schmelzeleitschiene ein mittiger Zentrierbund und ein aufgeweiteter, gerundete Seitenwandungen aufweisender Schmelzeeintritt zur Aufnahme des jeweiligen Düsensystems angeordnet ist.

0216369
753/58-97

Durch die Anordnung von einer oder mehreren separaten Schmelzeleitschienen zwischen den Teilen der mittleren längs zur Schließrichtung geteilten Formaufspannplatten ist bei jeder Gestaltung der Form eine schnelle und gleichmäßige Abspritzung beider Formen gewährleistet. Die Ausbildung der mittleren Formaufspannplatte mit der Schmelzeleitschiene erfordert nunmehr Überlegungen, wie das Verschlußdüsensystem zweckmäßigerweise ausgebildet und angeordnet werden kann.

Der Erfindung liegt die Aufgabe zugrunde, bei einer Spritzgießmaschine der aufgezeigten Gattung das Verschlußdüsensystem so auszubilden und an dem Schmelzeleitkanal der mittleren geteilten Formaufspannplatte anzuordnen, daß die für die Entnahme der Formteile aus den Formen erforderliche Trennung der mittleren geteilten bewegbaren Formaufspannplatte von der zugeordneten Schneckeneinheit mit einem Minimum an Aufwand erreichbar ist.

Die Aufgabe wird erfindungsgemäß dadurch gelöst, daß auf der Stirnseite der Schmelzeleitschiene ein in Spritzrichtung in sich verfahrbares Verschlußdüsensystem fest angeordnet ist, dem innerhalb der Schmelzeleitschiene ein Schmelzeausgleichssystem zugeordnet ist.

Zweckmäßige Ausgestaltungen der Erfindung ergeben sich aus den Unteransprüchen.

Durch die erfindungsgemäße Ausbildung ist die Möglichkeit geschaffen, innerhalb des Fertigungszyklus die Spritzeinheit mit einer oder mehreren Schneckeneinheiten in einer festen Spritzposition zu belassen. Die für die Entnahme der Formteile aus den Formen erforderliche Trennung der mittleren geteilten bewegbaren Formaufspannplatte von der zugeordneten Schneckeneinheit erfolgt durch das Zurückfahren des in sich verfahrbaren Verschlußdüsensystems, wozu nur geringe Kräfte erforderlich sind. Da das Zurückfahren des Verschlußdüsensystems nur über einen minimalen Weg erforderlich ist, erfolgt das Trennen und auch der Wiederanschluß in denkbar kürzester Zeit.

Ein Ausführungsbeispiel der Erfindung ist in der Zeichnung dargestellt und wird im folgenden näher beschrieben. Es zeigen:

Fig. 1 einen Vertikalschnitt durch einen Teil einer Schmelzeleitschiene mit unmittelbar angeschlossenem in sich verfahrbaren Verschlußdüsensystem in Einspritzstellung und

Fig. 2 einen Vertikalschnitt durch einen Teil einer Schmelzeleitschiene mit Schmelzeausgleichssystem mit Schmelzekammer im geöffneten Zustand.

Auf der Stirnseite einer Schmelzeleitschiene 10, die zwischen den beiden Teilen einer bewegbaren mittleren längs zur Schließrichtung geteilten Formaufspannplatte 11 eingespannt ist, ist ein in Spritzrichtung
in sich verfahrbares Verschlußdüsensystem fest angeordnet, dem innerhalb der Schmelzeleitschiene 10 ein
Schmelzeausgleichssystem zugeordnet ist.

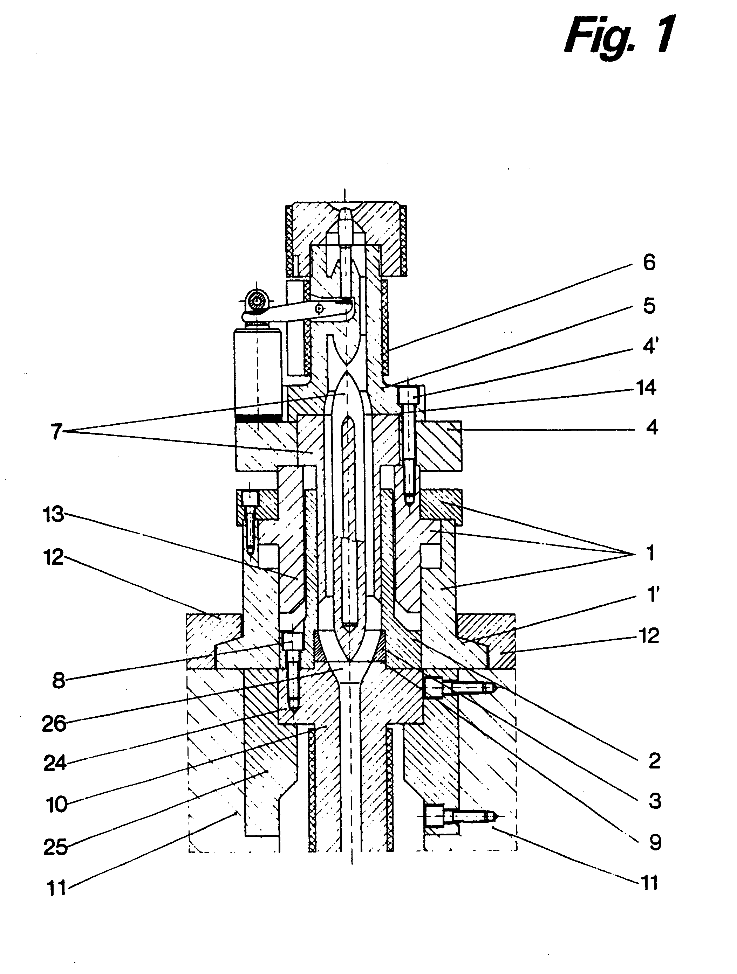

Das Verschlußdüsensystem ist aus einem Hydraulikzylinder 1 mit Spannflansch 1', einer innenliegenden
Torpedoführungshülse 2 mit einem innenbeheizten verfahrbaren Torpedo 7 sowie einer verfahrbaren Düsenplatte 4 mit beheizbarer Verschlußdüse 5 gebildet.
Diese Verschlußdüse 5 besitzt eine äußere Heizung 6.
Wie Fig. 1 zeigt, ist die Torpedoführungshülse 2
über den Zentrierbund 9 zentriert und über Schrauben 8
auf dem oberen Flansch 24 der Schmelzeleitschiene 10
fest angeschlossen. Der Flansch 24 lagert auf Führungskupplungen 25, die über die Breite der geteilten
Formaufspannplatte 11 verlaufen und mit dieser verbunden sind. Der Hydraulikzylinder 1 ist auf der
geteilten Formaufspannplatte 11 mittels einer auf
der Stirnseite angeordneten und doppelseitig wirkenden Schnellspannvorrichtung 12 befestigt. Zwischen
dem Schmelzeeintritt 26 und der Torpedoführungshülse 2
ist ein Formring 3 angeordnet. Der verfahrbare Kolben
des Hydraulikzylinders 1 ist als Kolbenring 13 ausgebildet.

Auf dem verfahrbaren Kolbenring 13 ist die Düsenplatte 4 lösbar angeschlossen. Als Verbindungsmittel
bieten sich Schrauben 4' an. Die verfahrbare Düsen-

0216369

platte 4 dient zur Aufnahme der mit einer Außenheizung 6 versehenen Verschlußdüse 5, die über einen Zentrierbund 14 des in die Torpedo-Führungshülse 2 eingepaßten Torpedos 7 aufgesetzt ist.

Die verfahrbare Düsenplatte 4 mit der aufgesetzten außenbeheizten Verschlußdüse 5 sowie der Torpedo 7 sind fest mit dem Kolbenring 13 des Hydraulikzylinders 1 verbunden. Diese Teile, also der Kolbenring 13, die Düsenplatte 4, der Torpedo 7 und die Verschlußdüse 5 bilden als Einheit den verfahrbaren Teil des Verschlußdüsensystems, während die Torpedoführungshülse 2 und ein Teil des Hydraulikzylinders 1 den fest angeordneten Teil des Verschlußdüsensystems bilden.

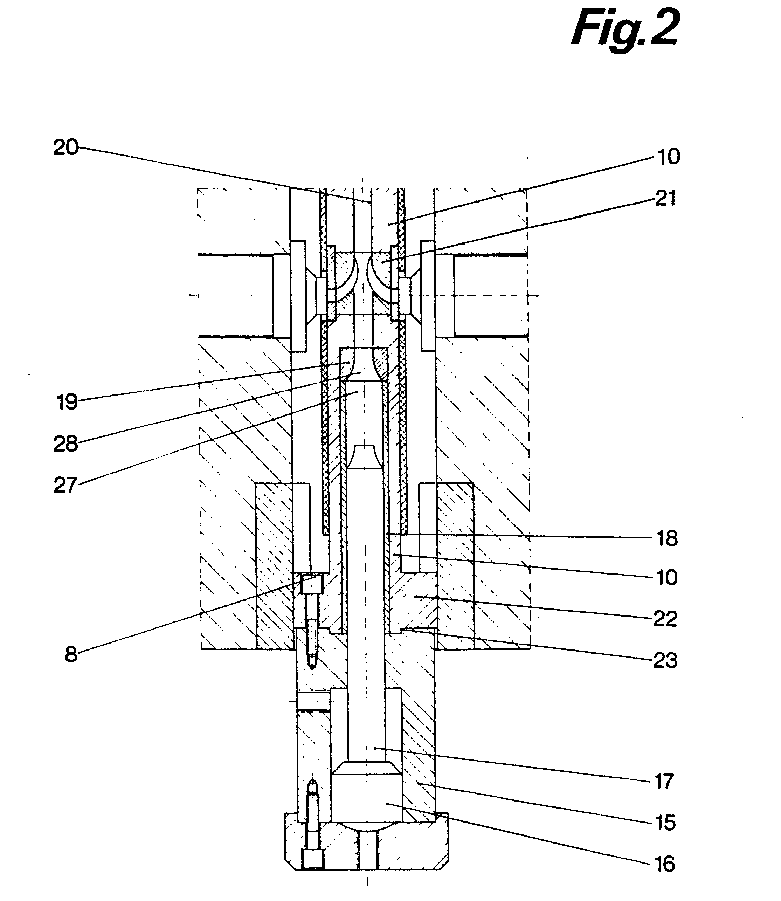

Das Schmelzeausgleichssystem, vgl. Fig. 2, ist in dem dem Schmelzeeintritt 26 gegenüberliegenden Ende der Schmelzeleitschiene 10 angeordnet. An diesem Ende ist ein Montageflansch 22 mit Zentrierbund 23 angeordnet, wobei die Leitschiene 10 außerhalb des in Fließrichtung der Schmelze gesehen letzten Schmelzeverteilerpaars 21 endet. Das Schmelzeausgleichssystem ist durch eine Schmelzekammer 27 mit zugeordnetem Hydraulikzylinder 15 mit Kolben 16, Kolbenstange 17 sowie Führungshülse 18 gebildet. Wichtig hierbei ist, daß das Aufnahmevolumen der Schmelzekammer 27 $\geq$ ist als das beim Verfahren des Verschlußdüsensystems entstehende Verdrängungsvolumen der Schmelze.

In Verlängerung der zentralen Schmelzeleitung 20 sind unmittelbar nach dem in Fließrichtung der Schmelze gesehen letzten Schmelzeverteilerpaars 21 ein Formring 19 und die Führungshülse 18 in die Schmelzeleitschiene eingepaßt. Die Führungshülse 18 für die Kolbenstange 17 des Kolbens 16 endet annähernd mit dem unteren Ende der Schmelzeleitschiene 10. Der Hydraulikzylinder 15 ist auf dem mit dem Zentrierbund 23 versehenen Montageflansch 22 der Schmelzeleitschiene 10 zentriert und am Montageflansch 22 lösbar angeschlossen.

Wie aus Figur 2 zu ersehen ist, weist die Schmelzeleitung 20 der Schmelzeleitschiene 10 an ihrem dem Schmelzeeintritt 26 gegenüberliegenden Ende eine Aufweitung 28 auf, die von dem Formring 19 umgeben ist. Das freie Ende der Kolbenstange 17 ist der Aufweitung 28 entsprechend ausgebildet. Die Schmelzekammer 27 besitzt einen größeren Durchmesser als die Schmelzeleitung 20.

Nach Schließen der Formstationen der Spritzgießmaschine fährt das in sich verfahrbare Verschlußdüsensystem von der Formaufspannplattenseite 11 auf das der Schneckeneinheit zugeordnete Verschlußdüsensystem, wodurch die für die Entnahme der Formteile aus den Formen erforderlich gewesene Trennung der mittleren Formaufspannplatte 11 von der zugeordneten Schneckeneinheit aufgehoben ist. Zur kraftschlüssigen Trennung fährt das in sich verfahrbare Verschlußdüsensystem in die Ausgangsstellung zurück, wodurch die erwähnte Schmelzekammer 27 geöffnet wird. Hierzu ist erforderlich, daß der Kolben 17 des Schmelzeausgleichssystems und die verfahrbaren Teile 13;4;7 und 5 des Verschlußdüsensystems zueinander synchron verlaufend angeordnet sind.

0216369

753/58-97

Aufstellung der Bezugszeichen:

| 1 | Hydraulikzylinder |
| 1' | Spannflansch von 1 |
| 2 | Torpedoführungshülse |
| 3 | Formring |
| 4 | Düsenplatte |
| 4' | Schrauben für 4 |
| 5 | Verschlußdüse |
| 6 | Heizung von 5 |
| 7 | Torpedo |
| 8 | Schrauben |
| 9 | Zentrierbund |
| 10 | Schmelzeleitschiene |
| 11 | mittlere geteilte Formaufspannplatte |
| 12 | Schnellspannvorrichtung |
| 13 | Kolbenring von 1 |
| 14 | Zentrierbund |
| 15 | Hydraulikzylinder |
| 16 | Kolben von 15 |
| 17 | Kolbenstange von 16 |
| 18 | Führungshülse |
| 19 | Formring |
| 20 | Schmelzeleitung |
| 21 | Schmelzeverteilerpaar |
| 22 | Montageflansch |
| 23 | Zentrierbund |
| 24 | Flansch von 10 |
| 25 | Führungskupplung |
| 26 | Schmelzeeintritt |
| 27 | Schmelzekammer |
| 28 | Aufweitung |

Anmelder:
Stübbe GmbH
Ismaninger Straße 67 a
8000 München 80


Patentansprüche:


1. Spritzgießmaschine zum Herstellen von Kunststoffteilen aus Thermoplasten, Duroplasten und/oder Elastomeren im Spritzgießverfahren oder Reaktionsspritzgießverfahren, mit einer Mehrstationen-Schließeinheit in horizontaler oder vertikaler Bauweise zur Aufnahme mehrerer Formen und mit einer zugeordneten Spritzeinheit zum gleichzeitigen Abspritzen der Formen, mit einer bewegbaren mittleren längs zur Schließrichtung geteilten Formaufspannplatte, deren beide Teile durch eine Schnellspannvorrichtung zusammengehalten sind und zwischen deren beiden Teilen ein Schmelzeleitsystem angeordnet ist, das eine oder mehrere separate Schmelzeleitschienen aufweist, wobei jede Schmelzeleitschiene an ihrer Stirnseite längs zur Fließrichtung der Schmelze fest zwischen der geteilt ausgebildeten Formaufspannplatte eingespannt ist und auf einem Flansch der Schmelzeleitschiene ein mittiger Zentrierbund und ein aufgeweiteter, gerundete Seitenwandungen aufweisender Schmelzeeintritt zur Aufnahme des jeweiligen Düsensystems angeordnet ist, dadurch gekennzeichnet,
daß auf der Stirnseite der Schmelzeleitschiene (10) ein in Spritzrichtung in sich verfahrbares Verschlußdüsensystem fest angeordnet ist,
dem innerhalb der Schmelzeleitschiene (10) ein
Schmelzeausgleichssystem zugeordnet ist.

2. Spritzgießmaschine nach Anspruch 1, dadurch gekennzeichnet, daß das Verschlußdüsensystem aus
einem Hydraulikzylinder (1) mit Spannflansch (1'),
einer innenliegenden Torpedoführungshülse (2)
mit einem innenbeheizten verfahrbaren Torpedo (7)
sowie einer verfahrbaren Düsenplatte (4) mit beheizbarer Verschlußdüse (5) gebildet ist.

3. Spritzgießmaschine nach Anspruch 2, dadurch gekennzeichnet, daß die Verschlußdüse (5) mit einer
äußeren Heizung (6) versehen ist.

4. Spritzgießmaschine nach einem der Ansprüche 1
bis 3, dadurch gekennzeichnet, daß die Torpedo-
Führungshülse (2) über einen Zentrierbund (9)
zentriert und auf dem Flansch (24) der Schmelzeleitschiene (10) fest angeschlossen ist.

5. Spritzgießmaschine nach einem der Ansprüche 1
bis 4, dadurch gekennzeichnet, daß zwischen
Schmelzeeintritt (26) und Torpedoführungshülse (2)
ein Formring (3) angeordnet ist.

6. Spritzgießmaschine nach einem der Ansprüche 1 bis 5, dadurch gekennzeichnet, daß der Hydraulikzylinder (1) auf der geteilten Formaufspannplatte (11) mittels einer auf der Stirnseite angeordneten und doppelseitig wirkenden Schnellspannvorrichtung (12) befestigt ist.

7. Spritzgießmaschine nach einem der Ansprüche 1 bis 6, dadurch gekennzeichnet, daß der verfahrbare Kolben des Hydraulikzylinders (1) als Kolbenring (13) ausgebildet ist.

8. Spritzgießmaschine nach einem der Ansprüche 1 bis 7, dadurch gekennzeichnet, daß auf dem verfahrbaren Kolbenring (13) des Hydraulikzylinders (1) die Düsenplatte (4) lösbar angeschlossen ist.

9. Spritzgießmaschine nach einem der Ansprüche 1 bis 8, dadurch gekennzeichnet, daß die verfahrbare Düsenplatte (4) mit der außenbeheizten Verschlußdüse (5) sowie der Torpedo (7) fest mit dem Kolbenring (13) des Hydraulikzylinders (1) verbunden sind.

10. Spritzgießmaschine nach einem der Ansprüche 1 bis 9, dadurch gekennzeichnet, daß auf die Düsenplatte (4) die Verschlußdüse (5) über einen Zentrierbund (14) des in die Torpedoführungshülse (2) eingepaßten Torpedos (7) aufgesetzt ist.

11. Spritzgießmaschine nach Anspruch 1, dadurch gekennzeichnet, daß das Schmelzeausgleichssystem in dem dem Schmelzeeintritt (26) gegenüberliegenden Ende der Schmelzeleitschiene (10) angeordnet ist, wobei die Leitschiene (10) außerhalb des in Fließrichtung der Schmelze gesehen letzten Schmelzeverteilerpaars (21) endet.

12. Spritzgießmaschine nach Anspruch 11, dadurch gekennzeichnet, daß das Schmelzeausgleichssystem durch eine Schmelzekammer (27) mit zugeordnetem Hydraulikzylinder (15) mit Kolben (16), Kolbenstange (17) sowie Führungshülse (18) gebildet ist.

13. Spritzgießmaschine nach einem der Ansprüche 1 bis 12, dadurch gekennzeichnet, daß das Aufnahmevolumen der Schmelzekammer (27) $\geq$ ist als das beim Verfahren des Verschlußdüsensystems entstehende Verdrängungsvolumen der Schmelze.

14. Spritzgießmaschine nach einem der Ansprüche 1 bis 13, dadurch gekennzeichnet, daß in Verlängerung der zentralen Schmelzeleitung (20) unmittelbar nach dem in Fließrichtung der Schmelze gesehen letzten Schmelzeverteilerpaar (21) ein Formring (19) und die Führungshülse (18) in die Schmelzeleitschiene (10) eingepaßt sind.

15. Spritzgießmaschine nach einem der Ansprüche 1 bis 14, dadurch gekennzeichnet, daß am Ende der Schmelzeleitschiene (10) ein Montageflansch (22) mit Zentrierbund (23) angeordnet ist.

0216369

16. Spritzgießmaschine nach einem der Ansprüche 1 bis 15, dadurch gekennzeichnet, daß die Führungshülse (18) für die Kolbenstange (17) des Kolbens (16) annähernd mit dem unteren Ende der Schmelzeleitschiene (10) endet.

17. Spritzgießmaschine nach einem der Ansprüche 1 bis 16, dadurch gekennzeichnet, daß der Hydraulikzylinder (15) auf den mit dem Zentrierbund (23) versehenen Montageflansch (22) der Schmelzeleitschiene (10) zentriert und am Montageflansch (22) lösbar angeschlossen ist.

18. Spritzgießmaschine nach einem der Ansprüche 1 bis 17, dadurch gekennzeichnet, daß der Kolben (17) des Schmelzeausgleichssystems und die verfahrbaren Teile (13;4;7 und 5) des Verschlußdüsensystems zueinander synchron verlaufend angeordnet sind.

19. Spritzgießmaschine nach einem der Ansprüche 1 bis 18, dadurch gekennzeichnet, daß die Schmelzeleitung (20) der Schmelzeleitschiene (10) an ihrem dem Schmelzeeintritt (26) gegenüberliegenden Ende eine Aufweitung (28) aufweist, die von dem Formring (19) umgeben ist.

20. Spritzgießmaschine nach einem der Ansprüche 1 bis 19, dadurch gekennzeichnet, daß das freie Ende der Kolbenstange (17) des Kolbens (16) entsprechend der Aufweitung (28) der Schmelzeleitung (20) ausgebildet ist.

21. Spritzgießmaschine nach einem der Ansprüche 1 bis 20, dadurch gekennzeichnet, daß der Durchmesser der Schmelzekammer (27) gegenüber dem Durchmesser der Schmelzeleitung (20) größer ist.

22. Spritzgießmaschine nach einem der Ansprüche 1 bis 21, dadurch gekennzeichnet, daß das der Schneckeneinheit zugeordnete Verschlußdüsensystem fest an die Schneckeneinheit angeschlossen ist und an den Stirnseiten des zum Verschlußdüsensystem gehörenden Adapters Führungsbahnen angeordnet sind.

23. Spritzgießmaschine nach einem der Ansprüche 1 bis 22, dadurch gekennzeichnet, daß den Führungsbahnen des Adapters zur Herstellung einer formschlüssigen Verbindung entsprechend ausgebildete Gegenbahnen in der mittleren geteilten bewegbaren Formaufspannplatte zugeordnet sind.

# Fig. 1

0216369

*Fig.2*